# EUROPEAN PATENT APPLICATION

(11) **EP 1 797 775 A1**
(43) Date of publication of application: **20.06.2007**
(21) Application number: 05077894.3
(22) Date of filing: 16.12.2005
(51) Int. Cl.: A23L 1/212, A23B 7/005

(54) **Chilled vegetables and a process for the preparation thereof**

(71) Applicant: UNILEVER N.V., 3013 AL Rotterdam (NL)
(72) Inventor: Mavroudis, Nikolaos Unilever R&D Vlaardingen B.V., 3133 AT Vlaardingen (NL)
(74) Representative: Tjon Tien Ril, Hon Kong Guno

(57) **Abstract**

A food product comprising vegetables and a process to prepare a vegetable with an improved bite for use therein comprising the step of immersing a fresh and uncooked vegetable in a vegetable conditioning solution said solution comprising one or more phenolic compounds whereby the vegetable conditioning solution is safe for human consumption and does not need to rinsed off the immersed vegetables for further processing;

## Description

The present invention relates to a process to prepare ready to use food products such as chilled meals and side dishes.

The consumer market is constantly changing. Consumers are becoming more discerning and have a greater awareness of dietary needs. In particular, consumers are increasingly showing a preference for natural foods not containing any "artificial" ingredients such as preservatives, stabilisers or artificial colouring or flavouring. Fresh food is, therefore, becoming more popular than dried, processed or frozen foods.

Chilled foods are perceived as being fresh and natural, the chilled cabinet is one of the fastest growing sectors of the European food market. Chilled food products can normally be found in chilled cabinets in e.g. supermarkets where they are typically stored at a temperature of between 4 and 7 °C. Examples of chilled food products include main courses likes pasta or rice dishes with meat, fish, vegetables and/or sauce. Other examples of chilled food products include side dishes, snacks, soups and sauces. Usually the chilled food product is ready for consumption, apart from a brief heating step to get the right temperature. Simply heating the chilled food product on a stove, in a microwave or conventional oven is all that is needed to prepare the meal. The ingredients that need to be cooked before consumption are usually, or at least partly cooked, i.e., no longer raw.

However, the processes used thus far to prepare chilled food products usually result in chilled food products with an unsatisfactory taste and quality compared to freshly prepared meals. The vegetables typically taste overcooked like most canned or frozen meals. The vegetables in current chilled food products generally lack the bite compared to vegetables in freshly prepared meals.

US4336273 discloses a vegetable and fruit preservation process whereby organic compounds are used. According to the examples the fruits and vegetables need to be treated with formaldehyde, ethylacetate and acetone. Obviously such potentially toxic compounds need to be rinsed off carefully before consumption. In addition, these compounds have a strong smell This makes the rinse step critical since even minor amounts can easily spoil the natural taste.

US5128160 discloses a method for preserving fresh fruit and vegetables under refrigerated temperatures generally between 0° C. and 20° C. by placing the fruits and vegetables in a gaseous atmosphere initially containing an effective amount of nitrogen monoxide or argon in the range of 10-100%, with optionally up to 50% oxygen, any remainder being composed of an inert gas.

US 3 446 630 discloses a process for preserving fresh vegetables, and fruits, by adding thereto small amounts of benzohydroxamic: acid or one of its non-toxic salts. Preferably the preservative is applied in aqueous solution in an amount of about 0.01 to about 1.0% calculated as benzohydroxamic -acid based on the weight of the foodstuff.

Thus, there remains a need for novel methods to prepare food products that have an improved bite without the unnecessary need for artificial additives.

### Summary of the invention

We have now found that it is possible to improve the bite of processed vegetables provided the process comprises the steps of:
a) immersing a fresh and uncooked vegetable in a vegetable conditioning solution said solution comprising one or more phenolic compounds whereby the vegetable conditioning solution is safe for human consumption and does not need to rinsed off the immersed vegetables for further processing;
b) heating the immersed vegetables in the vegetable conditioning solution to a temperature of 45 to 95 degrees C for 2 to 180 minutes,
c) cooling the conditioned vegetable, preferably under non-vacuum conditions;
d) optionally, combining the conditioned vegetable with at least one other food component;
e) optionally, heating the combination of conditioned vegetable and the at least one other food component to a temperature of 45 to 95 degrees C for 2 to 180 minutes,
f) optionally, packaging the conditioned vegetable in an airtight container. According to a second aspect of the present invention, a food product is provided comprising conditioned vegetables obtainable by the process according to the first aspect of the invention. According to a third aspect of the invention a chilled food product is provided further comprising sauce, meat, fish, pasta, rice, potato or a mixture thereof. Surprisingly, the vegetables prepared according to the first aspect of the invention have improved bite, appearance and chilled shelf life without the need to use compounds that are perceived as "chemical" or "artificial" by the consumer. An improved bite is meant to describe the crunchy mouthfeel when tasting and eating the vegetable such as when eating a freshly cooked vegetable. In contrast, the bite of cooked vegetable which has been stored for eg 7 days usually has a soft and sometimes even gluey mouthfeel.

### Detailed description of the invention

To get the best quality vegetables it is preferred to use fresh and uncooked vegetables. Before processing, the vegetables are usually washed with water, advantageously with agitation and the washing water removed. If desired, the vegetables may be washed a second time. The washing removes extraneous matter and decreases the microbial load. Although vegetables may be used uncut, it is preferred to use comminuted vegetables. Vegetables may be comminuted by any means known in the art. Obviously for some food products the comminuted vegetables may be combined with vegetables that are so small that these need not be cut such a peas or corn.

The vegetables are then immersed in a vegetable conditioning solution said solution comprising one or more phenolic compounds whereby the vegetable conditioning solution is safe for human consumption and does not need to rinsed off the immersed vegetables for further processing. The vegetables may be immersed for any time as long as it results in vegetables with a good bite without any adverse effects to the appearance. Preferably vegetables are immersed less than 24 hours preferably, less than 2 hours, more preferably less than 1 hour and preferably for at least 1 min, more preferably at least 5 min and most preferably at least 10 min.

The immersed vegetables are then heated in the vegetable conditioning solution to a temperature of 45 to 90 degrees C for 2 to 180 minutes. In the food processing industry the heating is often carried out in batches of more than 10 kg vegetables in large vessels that can be opened during the heating step. Alternatively a continuous heating process could be applied using common blanching equipment, which is also open during the heating step and no pressure build up occurs. This first heating step may be carried out at temperatures of at least 50, more preferably at least 55 most preferably at least 60 degrees C and at most 95, preferably at most 90, most preferably at most 85 degrees C. The duration of this first heating step is preferably less than 24 hours preferably, less than 3 hours, more preferably less than 2 hour and preferably for at least 1 min, more preferably at least 5 min and most preferably at least 10 min

After the heating step the conditioned vegetables may be packed and transferred to another container for an optional cooling step. Although care is taken to work under clean conditions, the vegetables need not be stored under vacuum during cooling. Preferably, the cooling is carried out under non-vacuum conditions.

The conditioned vegetable either before or after cooling may be combined with at least one other food component. The conditioned vegetable may be mixed with food components such as other vegetables (either conditioned or not), sauce, protein, pasta, rice, potato or any mixture thereof. The protein may be from an animal, vegetable or fungus. Preferred sources are meat, fish, seafood, and meat replacers. These food components may be uncooked but normally will be cooked or partially cooked.

After cooling, the conditioned vegetable either with or without at least one other food component may optionally be exposed to a second heating step at a temperature of 45 to 95 degrees C for 2 to 180 minutes. This second heating step may be carried out at temperatures of at least 50, more preferably at least 55 most preferably at least 60 degrees C and at most 95, preferably at most 85, most preferably at most 80 degrees C. The duration of this first heating step is preferably less than 24 hours preferably, less than 2 hours, more preferably less than 1 hour and preferably for at least 1min, more preferably at least 5 min and most preferably at least 10 min. Surprisingly, the immersion and first heating step in the vegetable conditioning solution according to the invention seems to protect the vegetables to the deleterious effects of the second heating step with regard to the appearance and bite of the vegetable.

Preferably, the conditioned vegetable with or without one or more food components will be packaged in an airtight container before being shipped to the point of sale. To increase shelf life the air in the container may be replaced by another gas mixture. These gas mixtures will usually have replaced part of all of the reactive gasses like oxygen with less reactive gasses. Other steps may be taken to increase shelf life such as irradiation as long as the bite of the resultant vegetable is still acceptable.

According to a further embodiment, chilled food product is provided comprising
a) a conditioned vegetable obtainable by a process according to any one of the inventive processes and
b) a sauce, protein, pasta, rice, potato or a mixture thereof.

For the purpose of the present invention a "chilled food product" is meant to describe a food product fit for human consumption that is stored in a chilled cabinet at the point of sale at a temperature of from 1 to 10 degrees C and has a shelf life of less than 7 days when stored at 20 degrees C and more than 7 days when stored at 7 degrees C. Storage is under atmospheric pressure and air.

For the purpose of the present invention "chilled shelf life" is measured when stored at a temperature of 7 degrees C at atmospheric pressure and air.

The chilled food product comprising a conditioned vegetable according to one of the aspects of this invention is generally stored at a temperature of from 1 to 10 degrees C. Unexpectedly the conditioned vegetable prepared according to an aspect of the invention has an improved chilled shelf life. Vegetables prepared accordingly have chilled shelf life of more than a month, preferably more than 3 months, more preferably more than 5 months. The present invention also enables the preparation of chilled food products with an extended shelf life. The chilled food product comprising a conditioned vegetable according to one of the aspects of this invention has a chilled shelf life of more than 7 days, preferably more than 14 days, more preferably more than 2 months.

Usually, the vegetables prepared according to the process are ambient unstable, ie the vegetables need to refrigerated at a temperature of from 1 to 10 degrees C to prevent spoilage in less than 7 days.

The phenolic compound may be phenolic acids, flavonoids, procyanidins, flavonols or more preferably a combination of any of them or even all of them. Phenolic acids include among others gallic acid, protocatechuic acid, ellagic acid, chlorogenic acid, isochlorogenic acid, caffeic acid. Flavonoids and flavonols include among others kaempferol, quercetin, isorhomnetin, myricetin, phloretin, phloridzin., procyanidins include catechin and epicatechin and polymeric phenols. Polymeric phenols include those primarily consisting of linked procyanidin units such as catechin, epicatechin, epigallocatechin and epicatechin gallate. Aromatic phenolic compounds may include include 4-ethylphenol and 4-ethylquaiacol. Preferably the phenolic compound is selected from catechin, epicatechin, polymeric phenols thereof and mixtures thereof.

The total amount of the one or more phenolic compounds in the vegetable conditioning solution is preferably less than 100000 mg/L, more preferably less than 20000 mg/L, even more preferably less than 10000 mg/L, and preferably at least 0.1 mg/L, preferably at least 10mg/L, more preferably at least 20 mg/L of phenolic compound per Liter of the vegetable conditioning solution.

The one or more phenolic compounds can be added as individual compound(s) but is preferred to use a natural source. A preferred natural source of the one or more phenolic compounds is selected from fruit juice concentrate, wine, beer, liquor and mixtures thereof. A preferred fruit juice concentrate is selected from the group consisting of grape juice concentrate, apple juice concentrate, pear juice concentrate and mixtures thereof. Suitable grape juice concentrate could be sourced from for example Real Pure Beverage Group, LLC2015 Highpoint Drive Brandon, Mississippi 39042, USA. or Yummy Fruit Juice Co. INC. Adana Yolu 13 Km., Mersin, Turkey. Suitable apple juice and pear juice could be sourced from for example Grünewald Fruchtsaft GmbH, Grazer Str. 20, A-8510 Stainz, Austria.

It is recognised that the level of the one or more phenolic compounds may vary depending on the natural source. Therefore, if a natural source natural source of the one or more phenolic compounds is used, any amount of such source may be used provided the concentration of the one or more phenolic compounds is as described above.

Thus, according to another especially preferred aspect of the invention, a vegetable conditioning solution is used comprising
a) a natural source of the phenolic compound selected from fruit juice concentrate, wine, beer, liquor and mixtures thereof, preferably less than 99 wt%, more preferably less than 95 wt%, and preferably at least 0.1 wt%, preferably at least 5 wt%, more preferably at least 15 wt% of said natural source; and
b) optionally, flavouring agents.

The vegetable conditioning solution may further comprises ethanol, preferably less than 40 wt%, more preferably less than 30 wt%, even more preferably less than 10 wt%, and preferably at least 0.1 wt%, preferably at least 1 wt%, more preferably at least 2 wt% of ethanol by weight of the vegetable conditioning solution.

In one especially preferred embodiment, the vegetable conditioning solution comprises an osmotic active agent, preferably less than 40 wt%, more preferably less than 30 wt%, even more preferably less than 20 wt%, and preferably at least 0.1 wt%, preferably at least 1 wt%, more preferably at least 2 wt% of the osmotic active agent by weight of the vegetable conditioning solution. The osmotic active agent is preferably selected from the group consisting of sucrose, fructose, glucose, honey and mixtures thereof. A particularly preferred osmotic active agent is honey

According to yet another preferred embodiment, the vegetable conditioning solution comprises a fermented alcoholic solution, preferably less than 99 wt%, more preferably less than 95 wt%, and preferably at least 0.1 wt%, preferably at least 30 wt%, more preferably at least 50 wt% of a fermented alcoholic solution by weight of the vegetable conditioning solution. The fermented alcoholic solution is preferably selected from wine, beer, liquors and mixtures thereof.

To avoid any misunderstanding since wine, beer, liquors and mixtures thereof may be a source of both the one or more phenolic compounds and ethanol, if the vegetable contains any a fermented alcoholic solution, the total amount thereof in the vegetable conditioning solution preferably less than 99 wt%, more preferably less than 95 wt%, and preferably at least 0.1 wt%, preferably at least 30 wt%, more preferably at least 50 wt% by weight of the vegetable conditioning solution.

According to another especially preferred aspect of the invention, a vegetable conditioning solution is used comprising
a) a fermented alcoholic solution, preferably less than 99 wt%, more preferably less than 95 wt%, and preferably at least 0.1 wt%, preferably at least 30 wt%, more preferably at least 50 wt% of a fermented alcoholic solution; and
b) an osmotic active agent, preferably less than 40 wt%, more preferably less than 30 wt%, even more preferably less than 20 wt%, and preferably at least 0.1 wt%, preferably at least 1 wt%, more preferably at least 2 wt% of an osmotic active agent by weight of the vegetable conditioning solution. by weight of the vegetable conditioning solution;
c) optionally, flavouring agents.

Usually, the vegetable conditioning solution comprises edible acid in an amount such that said aqueous solution has a pH of from 2.5 to 4.2, preferably from 3.0 to 4.0. However, in some instance it may preferred to adjust the pH of the vegetable conditioning solution to neutral to prevent discoloration of certain green vegetables like broccoli and green beans.

Although one of the advantages of the present invention that antimicrobial agents need not be used, in some cases, it may be preferred to add antimicrobial agents to the vegetable conditioning solution in the usual amounts.

In some instances,the vegetable conditioning solution may comprises 0 to 2 wt%, preferably 0 to 1 wt%, more preferably 0 to 0.5 wt% of calcium chloride.

Any vegetable may be used for the present purpose. For most chilled food products, the vegetable is preferably selected from the group consisting of aubergine, courgette, pepper, broccoli, green bean, carrot, potato, mushroom, corn, peas, onion, tomato and mixtures thereof.

The further comprises 0.1 to 20 wt% of flavouring agents, preferably the flavouring agents are selected from lemon juice, NaCl, vinegar, spices, herbs and mixtures thereof. When the vegetable conditioning solution comprises NaCl, the vegetable condition solution preferably comprises less than 4 wt%, more preferably less than 3 wt%, even more preferably less than 2 wt%, and preferably at least 0.001 wt%, preferably at least 0.01 wt%, more preferably at least 0.1 wt% of NaCl by weight of the vegetable conditioning solution.

Thus, according yet another embodiment, the present invention also provides a conditioned vegetable obtainable according to any one of processes of the present invention. Furthermore, a vegetable is provided comprising of from 0.001 ppb to 1000 ppm of one or more phenolic compounds which do not naturally occur in said vegetable.

Preferred chilled food products can also comprise soluble fibers, insoluble fibers, gums, starches, cellulose, vitamins, chelators, buffers, antioxidants, colorants, acidulants (including inorganic acids), emulsifiers, syrups, milk, food grade dispersants or stabilizers (like propylene glycol alginate), solubilizing agents (like propylene glycol), milk powder or mixtures thereof.

Other than in the examples, or where otherwise indicated, all numbers expressing quantities of ingredients or reaction conditions used herein are to be understood as modified in all instances by the term "about". Similarly, all percentages are weight/weight percentages of the vegetable conditioning solution unless otherwise indicated. Where the term "comprising" is used in the specification or claims, it is not intended to exclude any terms, steps or features not specifically recited. When different ranges are specified, all sub ranges subsumed therein are also included.
To illustrate the invention, the following non-limiting examples are given below.

### Examples

### Examples 1 to 5

Fresh and uncooked vegetable (courgette, also called zucchini) was comminuted and the pieces of courgette were immersed and heated in the vegetable conditioning solutions according to the table 1 at 75 degrees C for 30 minutes. The vegetables prepared with the vegetable conditioning solutions according to example 4 and 5 had an improved bite compared to those prepared using examples 1, 2 and 3. In addition, the vegetables prepared according to the invention (solution 4 and 5) also had a good taste, appearance and chilled shelf life.

**Table 1 Vegetable conditioning solutions (1, 2 and 3 are comparative examples, 4 and 5 are according to the invention)**

| w/w% | 1 | 2 | 3 | 4 | 5 |
|---|---|---|---|---|---|
| Ethyl acetate (w/w%) | 10 | | | | |
| Tween (w/w%) | 0.8 | 0.8 | | 0.8 | |
| phenolic compounds | | | | 20-10000 mg/L* | 20-10000 mg/L* |
| Ethanol (w/w%) | | 10 | 10 | 6-10* | 6-10* |
| Honey (w/w%) | | | | 6.25 | 6.25 |
| Sucrose (w/w%) | | | 5 | | |
| Water (balance) | | | | | |

| | | | | | |
|---|---|---|---|---|---|
| Tween is a polyoxyalkylene derivative of sorbitan monolaurate available from ICI Americas Inc. * sourced from wine, phenolic compounds include catechin and epicatechin. | | | | | |

### Examples 6 to 10

Examples 6 to 10 listed in table 2 show other preferred embodiments according to the present invention. Pieces of pepper and aubergine are immersed and heated in solutions as listed in table 2 for at 75 degrees C for 30 minutes.

**Table 2**

| **(W/w%)** | **Ex. 6** | **Ex. 7** | **Ex. 8** | **Ex. 9** | **Ex. 10** |
|---|---|---|---|---|---|
| Wine* | 85 | 91.5 | 85 | 91.5 | |
| Ethanol | 6.8 | 7.3 | 6.8 | 7.3 | |
| Honey | 13 | 6.5 | | | |
| Salt | 2 | 2 | 2 | 2 | |
| Grape juice concentrate | | | 13 | 6.5 | 23 |
| Water (balance) | | | | | |

| | | | | | |
|---|---|---|---|---|---|
| *Wine (containing 8% ethanol and phenolic compounds such that the vegetable conditioning solution comprises 20-10000 mg/L of phenolic compounds including catechin and epicatechin) Grape juice concentrate (containing phenolic compounds such that the vegetable conditioning solution comprises 20-10000 mg/L of phenolic compounds including catechin and epicatechin). | | | | | |

### Example 11

A chilled pasta sauce is prepared using the vegetable prepared according to examples 3 and 6 by adding the vegetable with salmon to a tomato sauce to form a pasta sauce. 250 gram of the pasta sauce is packaged in an airtight container and pasteurised at 90 degrees C for 25 minutes. The shelf life is 120 days when stored at 7 degrees C.

## Claims

1. A process to prepare a vegetable for use in a chilled food product comprising the steps of
a) immersing a fresh and uncooked vegetable in a vegetable conditioning solution said solution comprising one or more phenolic compounds whereby the vegetable conditioning solution is safe for human consumption and does not need to rinsed off the immersed vegetables for further processing;
b) heating the immersed vegetables in the vegetable conditioning solution to a temperature of 45 to 95 °C for 2 to 180 minutes,
c) cooling the conditioned vegetable, preferably under non-vacuum conditions ;
d) optionally, combining the conditioned vegetable with at least one other food component;
e) optionally, heating the combination of conditioned vegetable and the at least one other food component to a temperature of 45 to 95 °C for 2 to 180 minutes,
f) optionally, packaging the conditioned vegetable in an airtight container.

2. A process according to claim 1 wherein the vegetable conditioning solution further comprises ethanol, preferably less than 40 wt%, more preferably less than 30 wt%, even more preferably less than 10 wt%, and preferably at least 0.1 wt%, preferably at least 1 wt%, more preferably at least 2 wt% of ethanol by weight of the vegetable conditioning solution.

3. A process according to any one of claims 1 or 2 wherein the vegetable conditioning solution further comprises an osmotic active agent, preferably less than 40 wt%, more preferably less than 30 wt%, even more preferably less than 20 wt%, and preferably at least 0.1 wt%, preferably at least 1 wt%, more preferably at least 2 wt% of the osmotic active agent by weight of the vegetable conditioning solution.

4. A process according to the preceding claim whereby the osmotic active agent is selected from the group consisting of sucrose, fructose, glucose, honey and mixtures thereof.

5. A process according to any one of the preceding claims whereby the vegetable conditioning solution comprises fruit juice concentrate, wine, beer, liquor and mixtures thereof as the source of the one or more phenolic compounds and the fruit juice concentrate is preferably selected from the group consisting of grape juice concentrate, apple juice concentrate, pear juice concentrate and mixtures thereof.

6. A process according to the preceding claim whereby the vegetable conditioning solution comprises a fermented alcoholic solution as a source for the one or more phenolic compounds, preferably the vegetable conditioning solution comprises less than 99 wt%, more preferably less than 95 wt%, and preferably at least 0.1 wt%, preferably at least 30 wt%, more preferably at least 50 wt% of a fermented alcoholic solution by weight of the vegetable conditioning solution.

7. A process according to the preceding claim whereby the fermented alcoholic solution is selected from wine, beer, liquors and mixtures thereof.

8. A process according to any one of the preceding claims whereby the vegetable conditioning solution comprises edible acid in an amount such that said aqueous solution has a pH of from 2.5 to 4.2, preferably from 3.0 to 4.0.

9. A process according to any one of the preceding claims whereby the vegetable conditioning solution comprises 0 to 2 wt% preferably 0 to 1 wt%, more preferably 0 to 0.5 wt% of calcium chloride.

10. A process according to any one of the preceding claims whereby the vegetable is selected from the group consisting of aubergine, courgette, pepper, broccoli, green bean, carrot, potato, onion, tomato and mixtures thereof.

11. A conditioned vegetable obtainable according to any one of the preceding claims, preferably having a chilled shelf life of more than a month, preferably more than 3 months, more preferably more than 5 months.

12. A conditioned vegetable comprising of from 0.001 ppb to 1000 ppm of one or more phenolic compounds which do not naturally occur in said vegetable before conditioning.

13. An airtight packaged food product comprising a conditioned vegetable obtainable by a process according to any one of the preceding claims.

14. A chilled food product comprising a conditioned vegetable obtainable by a process according to any one of the preceding claims further comprising sauce, protein, pasta, rice, potato or a mixture thereof.

15. A chilled food product comprising a conditioned vegetable obtainable by a process according to any one of the preceding claims whereby the chilled food product has a chilled shelf life of more than 7 days, preferably more than 14 days, more preferably more than 2 months..
